Europäisches Patentamt

European Patent Office

Office européen des brevets

(11) Numéro de publication: **0 122 167**
**A1**

## (12) DEMANDE DE BREVET EUROPEEN

(21) Numéro de dépôt: **84400434.1**

(22) Date de dépôt: **05.03.84**

(51) Int. Cl.³: **H 04 N 9/535,** H 04 N 9/04

(30) Priorité: **07.03.83 FR 8303711**

(43) Date de publication de la demande: **17.10.84**
**Bulletin 84/42**

(84) Etats contractants désignés: **AT BE CH DE GB IT LI LU NL SE**

(71) Demandeur: **S.A. DEMIA, 3 boulevard Pasteur, Luxembourg (LU)**

(84) Etats contractants désignés: **BE CH DE GB IT LI NL SE AT**

(71) Demandeur: **SODECOM, 15 bis rue de Marignan, F-75008 Paris (FR)**

(84) Etats contractants désignés: **LU**

(72) Inventeur: **Mikrut, Antoine, 37 rue Reuilly, F-75012 Paris (FR)**

(74) Mandataire: **Beauchamps, Georges et al, Cabinet Z.Weinstein 20, avenue de Friedland, F-75008 Paris (FR)**

(54) **Système de traitement des signaux de télévision en couleur, notamment du type SECAM en particulier pour l'enregistrement sur un support magnétique ou autre.**

(57) La présente invention concerne un système de traitement de signaux issus d'une caméra de télévison en couleur.

L'invention est caractérisée en ce que des convertisseurs analogiques-numériques (10), (11) et (12) sont associés respectivement à des dispositifs d'élimination de parasites (20), (21) et (22).

L'invention trouve application dans le domaine vidéo.

EP 0 122 167 A1

- 1 -

Système de traitement des signaux de télévision en couleur, notamment du type SECAM en particulier pour l'enregistrement sur un support magnétique ou autre.

La présente invention concerne un système de traitement de signaux issus d'un dispositif de prise de vue d'une caméra de télévision en couleur, notamment du type SECAM, en vue de leur application à un dispositif récepteur tel qu'un dispositif d'enregistrement ou calculateur.

Les systèmes de traitement de ce type, qui sont connus jusqu'à présent, ne prévoient pas une conversion des signaux analogiques de différence de couleur et de luminance en signaux numériques, tout en garantissant une définition élevée de l'image.

La présente invention a pour objectif de proposer un système de traitement susceptible d'accomplir cette fonction.

A cette fin, le système de traitement selon l'invention est caractérisé en ce qu'il comprend pour chaque signal de chrominance ou de différence de couleur $D_R$ et $D_B$ et le signal de luminance $E'_Y$ un convertisseur analogique - numérique, auquel est associé un dispositif d'élimination de parasites pour éliminer les parasites et les bruits de fond.

Selon une caractéristique avantageuse de l'invention, le dispositif d'élimination de parasites comporte deux mémoires destinées respectivement au stockage de la trame qui vient d'être établie et la trame précédente et une unité de traitement telle qu'un micro-ordinateur ou un microprocesseur pour effectuer suivant une routine stockée dans une mémoire morte une comparaison des deux trames successives et l'élimination d'éléments non identiques représentatifs de parasites, qui sont contenus dans les deux trames.

Selon une autre caractéristique avantageuse de l'invention, le système de traitement comporte un oscillateur générateur de signaux de haute fréquence tel que de l'ordre de 100 MHz, accomplissant la fonction d'une horloge générale et en ce que toutes les fréquences de synchronisation de ligne et de trame et les signaux destinés à cadencer le fonctionnement des convertisseurs analogiques-numériques et du dispositif d'élimination de parasites sont dérivés du signal horloge par division des fréquences.

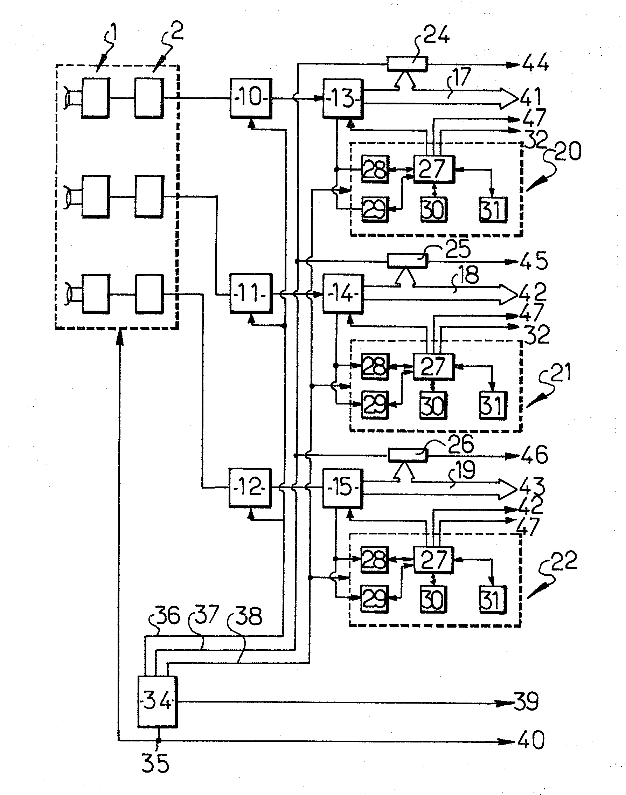

L'invention sera mieux comprise et d'autres buts, caractéristiques, détails et avantages de celle-ci apparaîtront plus clairement au cours de la description explicative qui va suivre faite en référence à la figure unique annexée donnée uniquement à titre d'exemple illustrant sous forme d'un schéma bloc un mode de réalisation de l'invention.

Dans le schéma représenté, on reconnait en 1 un dispositif de prise de vue d'une caméra de télévision en couleur et en 2 le dispositif des trois matrices destiné à produire à leur sortie les signaux de chrominance, c'est-à-dire de différence de couleur $D_R = E'_R - E'_Y$ ; $D_B = E'_B - E'_Y$ et le signal de luminance $E'_Y$ du type SECAM.

- 3 -

Le système de traitement de ces signaux comprend trois convertisseurs analogiques-numériques 10, 11, 12, chacun étant destiné au traitement d'un des trois signaux précités. Chaque convertisseur est directement relié à la sortie d'une des trois matrices. En aval de chaque convertisseur 10 à 12 on constate la présence d'un circuit d'aiguillage respectivement 13, 14 et 15 reliant le convertisseur auquel il est associé à un bus de données de sortie 17, 18 et 19 soit directement soit par l'intermédiaire d'un dispositif d'élimination de parasites 20, 21 ou 22. Etant donné que sur chaque bus les signaux numériques en code binaire produits par le convertisseur analogique-numérique 10, 11 ou 12 correspondant sont présents suivant une constellation en parallèle, on prévoit pour chacun des bus de données un convertisseur parallèle-série 24, 25 ou 26 destiné à convertir la constellation en parallèle en une constellation de signaux en série.

Chacun des dispositifs d'élimination de parasites 20, 21 ou 22 comprend une unité de traitement 27, telle qu'un micro-ordinateur ou microprocesseur, deux mémoires vives 28, 29 destinées à stocker respectivement la trame entière qui est en train d'être produite par la caméra et la trame précédente, ainsi qu'une mémoire morte 30 contenant la routine pour l'unité de traitement. Cette dernière peut également être programmée pour assurer la production d'une tension continue d'alimentation très stable, à l'aide de moyens convertisseurs numériques – analogiques 31 à partir d'un chiffre binaire préalablement défini. Cette tension continue peut servir de tension de référence pour le système d'alimentation des différents éléments du dispositif de traitement proposé par l'invention. La borne de sortie de cette tension est indiqué en 32. Le dispositif d'élimination de parasite peut également être pourvu de moyens connus en soi permettant la correction d'erreurs contenues dans

0122167

- 4 -

les signaux numériques portant sur plusieurs éléments
binaires par exemple en assurant la présence d'un nombre
prédéterminé d'états binaires dans chaque signal. Le
dispositif de traitement 27 permet l'accomplissement
de cette fonction connue en soi. L'unité de traitement
peut être adaptée pour produire un signal indicateur
d'absence d'erreur dans les signaux numériques.

Pour assurer un parfait synchronisme du fonctionnement
des différents éléments du système, celui-ci comprend un
oscillateur à quartz 34 constituant un générateur de
signaux de haute fréquence, par exemple de l'ordre de
100 MHz. Cet oscillateur accomplit la fonction d'une
horloge générale. Comme le montre la figure, les signaux
de synchronisation de ligne et de trame et de demi-ligne
disponibles en 35 sont dérivés de l'horloge générale.
Les convertisseurs analogiques-numériques 10 à 12, les
convertisseurs parallèle-série 24 à 26 et les dispositifs d'élimination de parasites 20 à 22 sont également
asservis à l'horloge. Les conducteurs des signaux d'horloge pour la commande de ces éléments sont indiqués
respectivement en 36, 37 et 38. Il est à souligner que
tous les signaux de synchronisation et de référence
sont obtenus par division de la fréquence du signal
d'horloge, ce qui garantit une stabilité parfaite des
signaux ainsi obtenus et un synchronisme parfait de
phase de toutes les opérations effectuées par le système de traitement selon la présente invention et des
signaux, c'est-à-dire de leurs flancs avant.

On constate que ce système proposé par l'invention
comporte des bornes de sortie 39, 40 auxquelles le
signal d'horloge de haute fréquence, produit par l'oscillateur 34 et les signaux de synchronisation de ligne
et de trame et de demi-ligne peuvent être prélevés. Les
symboles de référence 41 à 43 constituent les bornes de
sortie des bus de données 17 à 19 tandis qu'aux bornes 44 à 46 sont disponibles les signaux numériques en constellation en série. Le signal d'absence d'erreur est présent à la sortie 47.

Le fonctionnement du système selon l'invention ressort immédiatement de la description qui vient d'être faite et de la figure. Il n'est donc pas nécessaire de le décrire, à l'exception du fonctionnement des dispositifs d'élimination des parasites. Chacun de ces dispositifs fonctionne de la manière suivante :

Pour éliminer les parasites, l'unité de traitement 27, sous la commande de la routine stockée dans la mémoire morte 30 compare chaque trame à la trame précédente. Ces trames sont stockées respectivement dans les mémoires vives 28, 29. A la suite de cette opération de comparaison, tous les éléments d'image qui sont communs aux deux trames seront conservés. Par contre, les éléments non identiques seront éliminés. Il est à noter que les deux trames sont décalées dans le temps de 20 millisecondes. Les éléments représentatifs de parasites ne seront donc généralement plus les mêmes dans les deux trames. Par une programmation appropriée relativement simple, l'unité de traitement peut être adaptée pour distinguer une différence dans les deux trames, produites par un objet qui se déplace devant la caméra, d'une différence occasionnée par des parasites. En effet, l'objet en déplacement conserve son contour général, c'est-à-dire les éléments d'image qui le représentent conservent sensiblement leurs formes. Ils ont seulement changé de place sur les deux trames. Cette non-altération de la forme générale des éléments d'image et représentative d'un objet en déplacement, d'une trame à la trame suivante, permet de la distinguer des parasites qui sont aléatoires et donc en principe toujours différents d'une trame à l'autre. On comprend aisément que le dispositif d'élimination de parasites peut être rendu encore plus sophistiqué et sensible à des paramètres particuliers en le reliant à un calculateur externe programmé en conséquence.

5. La description qui vient d'être faite montre que le système de traitement des signaux de télévision en couleur, proposé par l'invention, produit à ses sorties des signaux numériques d'une excellente qualité, exempt de parasites de bruit de fond et d'erreurs.

Revendications

1. Système de traitement de signaux issus d'un dispositif de prise de vue d'une caméra de télévision en couleur, notamment du type SECAM, en vue de leur application à un dispositif récepteur, tel qu'un dispositif d'enregistrement ou calculateur, caractérisé en ce qu'il comprend pour chaque signal de chrominance $(D_R, D_B)$ et le signal de luminance $(E'_Y)$ un convertisseur analogique-numérique (10, 11, 12) auquel est associé un dispositif d'élimination de parasites (20, 21, 22), pour éliminer les parasites et le bruit de fond.

2. Système selon la revendication 1, caractérisé en ce que chaque dispositif d'élimination de parasites (20, 21, 22) comporte deux mémoires (28, 29) pour le stockage de deux trames successives et une unité de traitement (27) adaptée pour effectuer de préférence suivant une routine stockée dans une mémoire (30) une comparaison des deux trames successives stockées dans les mémoires (28, 29) et l'élimination d'éléments non identiques représentatifs de parasites.

3. Système selon la revendication 2, caractérisé en ce que le degré de sophistication et les critères de traitement des dispositifs d'élimination de parasites sont variables par branchement de ces dispositifs à un calculateur externe.

4. Système selon l'une des revendications précédentes, caractérisé en ce qu'à chaque convertisseur analogique-numérique (10, 11, 12) est associé un convertisseur parallèle-série (24, 25, 26) destiné à convertir les signaux numériques en code binaire disponibles en parallèle aux sorties des convertisseurs analogiques-numériques, en une constellation de signaux en série.

5. Système selon l'une des revendications précédentes, caractérisé en ce qu'il comprend un oscillateur générateur (34) de signaux de haute fréquence adapté pour former une horloge générale et en ce que tous les signaux de synchronisation de ligne et de trame et les signaux horloge appliqués au convertisseur (10, 11, 12 ; 24, 25, 26) et au dispositif d'élimination de parasites (20, 21, 22) sont dérivés dudit signal d'horloge de haute fréquence par division des fréquences.

6. Système selon l'une des revendications 2 à 5, caractérisé en ce que les dispositifs d'élimination de parasites (20, 21, 22) comprennent des moyens convertisseurs numériques-analogiques (23) destinés à produire sous la commande de l'unité de traitement (27) une tension de sortie continue très stable à partir d'un chiffre binaire prédéterminé.

7. Système selon l'une des revendications précédentes, caractérisé en ce que les dispositifs d'élimination de parasites (20, 21, 22) comportent des moyens de correction d'erreurs sur plusieurs éléments binaires, en assurant la présence d'un nombre prédéterminé d'états binaires dans chaque signal.

8. Système selon l'une des revendications précédentes, caractérisé en ce que les dispositifs d'élimination de parasites comportent des moyens générateurs d'un signal (en 47) indicateur d'absence d'erreur dans les signaux numériques.

Office européen
des brevets

**RAPPORT DE RECHERCHE EUROPEENNE**

Numéro de la demande

EP 84 40 0434

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-4 064 530 (KAISER et al.) <br> * Colonne 3, ligne 46 - colonne 4, ligne 16 * <br><br> ----- | 1 | H 04 N 9/535 <br> H 04 N 9/04 |

DOMAINES TECHNIQUES
RECHERCHES (Int. Cl. 3)

H 04 N 9/00
H 04 N 5/00

Le présent rapport de recherche a été établi pour toutes les revendications

| Lieu de la recherche | Date d'achèvement de la recherche | Examinateur |
|---|---|---|
| LA HAYE | 12-06-1984 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant